# FASCICULE DE BREVET EUROPEEN

(11) **EP 3 154 856 B1**
(45) Date de publication et mention de la délivrance du brevet: **08.11.2017**
(21) Numéro de dépôt: 15732849.3
(22) Date de dépôt: 10.06.2015
(51) Int. Cl.: B64C 39/06

(54) **VEHICULE AERIEN AVEC DES AILES POLYGONALS**
LUFTFAHRZEUG MIT POLYGONALEN FLÜGELN
AIRCRAFT WITH POLYGONAL WINGS

(30) Priorité: 10.06.2014 FR 1455218
(43) Date de publication de la demande: 19.04.2017
(73) Titulaire: Danielson Aircraft Systems, 58470 Magny Cours (FR)
(72) Inventeur: HUBSCHWERLEN, Frédéric, 58240 Saint-Pierre-le-Moutier (FR)
(74) Mandataire: Cabinet Laurent & Charras
(86) Numéro de dépôt international: PCT/FR2015/051526
(87) Numéro de publication internationale: WO 2015/189518

(56) Documents cités:
- US-A- 2 194 596
- US-B1- 8 657 226

## Description

### DOMAINE TECHNIQUE

La présente invention concerne un véhicule aérien ou un véhicule aérien sans pilote, communément appelé drone, ayant un faible encombrement et une grande autonomie en vol et permettant un décollage et un atterrissage sur une longueur de piste courte.

### ART ANTERIEUR

Dans le domaine des véhicules aérien sans pilote, communément appelés drone ou UAV selon l'acronyme anglo-saxon « *Unmanned Aerial Vehicle* » ou UAS selon l'acronyme anglo-saxon « *Unmanned Aerial System* », il est bien connu différents types d'engin que l'on peut classer dans deux grandes catégories, à savoir les aéronefs tactiques à voilure fixe et les aéronef à décollage et atterrissage verticaux également appelés ADAV ou VTOL selon l'acronyme anglo-saxon « *Vertical Take-off and Landing aircraft ».*

Les aéronefs à décollage et atterrissage verticaux présentent l'avantage de permettre une utilisation à partir de terrains de très petites dimensions. Toutefois, ces aéronefs présentent l'inconvénient d'être particulièrement couteux. De tels aéronefs sont notamment décrits dans les brevets américains US 5,758,844 et US2009/0045295.

Le document US 5,758,844 décrit un véhicule aérien comportant un fuselage, une pluralité de surfaces de levage attachés aux dispositifs de fuselage ayant de contrôle qui y sont attachés et un système de propulsion articulé solidaire dudit fuselage. Ledit système de propulsion comprend un ensemble de conduite relié de manière pivotante sur le fuselage. L'ensemble de conduite comprend une conduite et un ensemble de propulsion monté à l'intérieur de ladite conduite. Un ensemble de moteur est relié à l'ensemble de propulsion. L'ensemble de conduite peut être positionné sensiblement verticalement pour fournir une poussée verticale directe suffisante pour un décollage vertical et un atterrissage et peut être dirigé dans d'autres positions pour fournir un spectre variable de configurations de décollage et d'atterrissage, ainsi que sensiblement horizontalement pour un vol à haute vitesse horizontale.

Le document US2009/0045295 décrit quant à lui un aéronef à décollage et atterrissage vertical court comprenant un fuselage et un assemblage de rotors orientable qui comporte une paire de rotors alignés contrarotatifs. Un des moteurs est arrêté en vol horizontal pour améliorer l'efficacité du vol. L'aéronef compote par ailleurs un cardan permettant d'orienter la poussée vers l'avant vers l'arrière et de gauche à droite pour contrôler le tangage et de roulis en vol stationnaire.

Les aéronefs tactiques à voilure fixe présentent quant à eux l'avantage d'être moins onéreux mais ils présentent l'inconvénient de nécessiter une piste de décollage et d'atterrissage importante. Afin de pallier cet inconvénient, on a déjà imaginé des dispositifs de lancement de ces drones tels que des rampes de décollage par exemple. De tels drones sont notamment décrits dans la demande de brevet international WO 2011/002331 par exemple.

Le document WO2011/002331 décrit un système d'avion sans pilote de faibles dimensions, destiné à l'observation et la reconnaissance aériennes, lequel comprend une station de commande au sol, des moyens de radiocommunication, de navigation et de commande de vol embarqués et au sol, un dispositif de lancement, et un aéronef sans pilote démontable et portant une charge utile, qui possède une structure modulaire et qui peut être facilement assemblé pour le vol et démonté pour son transport dans un conteneur compact, système dans lequel une plus grande simplicité et une plus grande fiabilité de la structure de l'aéronef sans pilote en même temps qu'une diminution de sa masse peuvent être obtenues grâce à la structure originale du longeron central du fuselage et aux connexions de verrouillage à éléments d'arrêt permettant de fixer des parties d'aile au fuselage. L'aéronef sans pilote possède le schéma aérodynamique d'une aile volante avec une hélice propulsive et une installation d'alimentation électrique, et comprend un système de parachute pour l'atterrissage.

Toutefois, ce type d'aéronef présente l'inconvénient de présenter une faible autonomie en vol et ne permet pas d'embarquer une charge utile importante.

Un véhicule aérien selon le préambule de la revendication 1 est divulgué par le brevet américain US 8,657,226.

Le document US 2,194,596 décrit un autre véhicule aérien constitué de deux fuselages latéraux connectés par une aile formant ensemble avec deux ailes latérales une section frontale en forme de polygone à quatre côtés.

### EXPOSE DE L'INVENTION

L'un des buts de l'invention est donc de remédier à ces inconvénients en proposant un véhicule aérien sans pilote de conception simple et peu onéreuse, ayant une grande autonomie de vol, un faible encombrement et la possibilité d'embarquer une charge utile importante tout en nécessitant une piste de décollage et d'atterrissage de faibles dimension.

A cet effet, et conformément à l'invention, il est proposé un véhicule aérien selon la revendication 1. L'axe de chaque hélice forme un angle, dans le plan vertical sagittal, avec le plan des ailes et/ou lesdites ailes comportent des volets à simple ou double ou triple fente afin de procurer une aile soufflée.

Accessoirement, au moins un des côtés desdites ailes latérales (5) est incurvé.

La première partie d'aile de l'aile latérale forme un angle compris entre 1 et 10° avec l'aile reliant les fuselages latéraux au fuselage central.

La seconde partie d'aile forme un angle compris entre 1 et 15° avec le plan sagittal vertical du véhicule aérien.

La troisième partie d'aile forme un angle compris entre 1 et 10° avec l'aile reliant les fuselages latéraux au fuselage central et un angle compris entre 1 et 10° avec la première partie d'aile.

La quatrième partie d'aile forme un angle compris entre -1 et -10° avec le plan sagittal vertical du véhicule aérien.

Accessoirement, l'aile reliant les fuselages latéraux au fuselage central comporte des moyens d'articulation permettant de replier les ailes latérales au-dessus du fuselage central.

Selon une variante d'exécution, les fuselages latéraux et les secondes parties d'aile des ailes latérales comprennent des moyens d'articulation de manière à replier la partie arrière des fuselages latéraux au-dessus de la partie avant des fuselages latéraux et les ailes latérales au-dessus de l'aile.

Par ailleurs, l'axe longitudinal du fuselage central s'étend en dessous de l'aile reliant les fuselages latéraux et l'axe de traction moteur de chaque fuselage latéral s'étend au-dessus de l'aile reliant les fuselages latéraux.

De plus, afin d'obtenir une bonne stabilité longitudinale du véhicule aérien suivant l'invention, l'angle de flèche de l'aile est compris entre 5 et 15°, et de préférence égal à 10°, et l'angle de flèche de la troisième partie d'aile de chaque aile latérale est compris entre -10° et -30°, et de préférence égal à -20°.

### DESCRIPTION SOMMAIRE DES FIGURES

D'autres avantages et caractéristiques ressortiront mieux de la description qui va suivre, de plusieurs variantes d'exécution, données à titre d'exemples non limitatifs, du véhicule aérien suivant l'invention, à partir des dessins annexés sur lesquels :
- la figure 1 est une vue en perspective du véhicule aérien suivant l'invention,
- la figure 2 est une vue de face du véhicule aérien suivant l'invention,
- la figure 3 est une vue de côté du véhicule aérien suivant l'invention,
- la figure 4 est une vue de dessus du véhicule aérien suivant l'invention
- la figure 5 est une vue en perspective du véhicule aérien suivant l'invention en position repliée.

### DESCRIPTION DETAILLEE DE L'INVENTION

Dans la suite de la description du véhicule aérien sans pilote suivant l'invention, les mêmes références numériques désignent les mêmes éléments. Par ailleurs, les différentes vues ne sont pas nécessairement tracées à l'échelle.

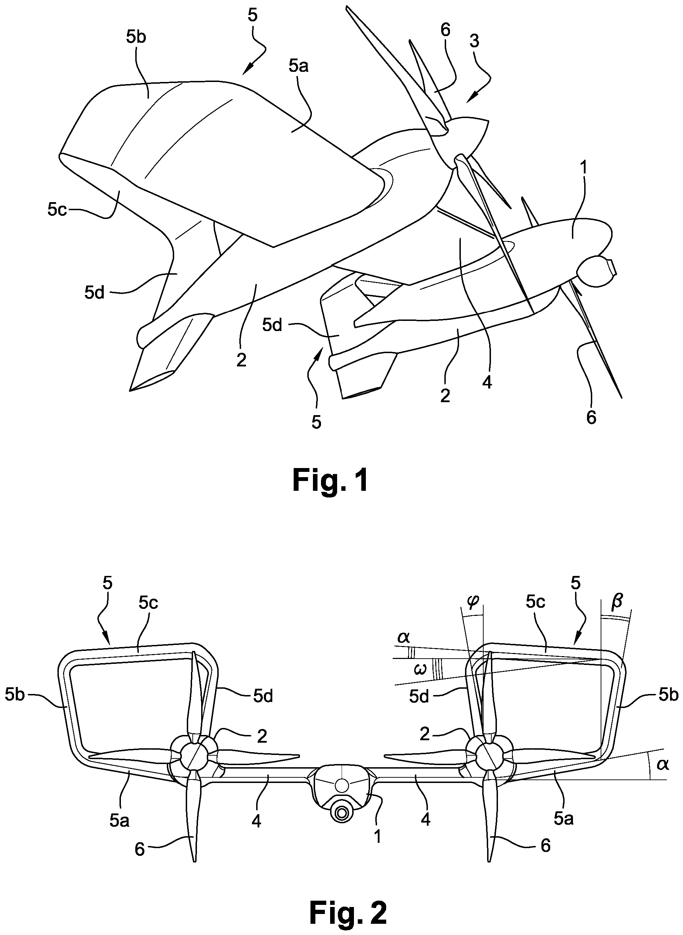

En référence aux figures 1 à 4, le véhicule aérien sans pilote suivant l'invention, communément appelé drone, est constitué d'un fuselage central (1) et deux fuselages latéraux (2) s'étendant parallèlement au fuselage central (1) et portant respectivement un moyen de propulsion (3). Lesdits fuselages latéraux (2) sont connectés au fuselage central (1) par une aile (4) incliné d'avant en arrière. Le fuselage central (1) présente une longueur inférieure à la longueur des fuselages latéraux (2). Par ailleurs, le véhicule aérien comporte également deux ailes dites latérales (5) présentant respectivement une section frontale en forme de quadrilatère s'étendant respectivement depuis lesdits fuselages latéraux (2). L'axe longitudinal du fuselage central (1) s'étend en dessous de l'aile (4) reliant les fuselages latéraux (2) au fuselage central (1) et l'axe de traction moteur s'étend au-dessus de l'aile (4) reliant les fuselages latéraux (2) au fuselage central (1).

On observera que le fuselage central (1) porte notamment des moyens de radiocommunication, de navigation et de commande de vol embarqués, non représentés. Ledit fuselage central (1) pourra également porter des moyens de surveillance tels qu'une caméra par exemple, des moyens d'armement, etc...sans pour autant sortir du cadre de l'invention.

Par ailleurs, on notera que le véhicule aérien pourra ne pas comporter de fuselage central (1) sans pour autant sortir du cadre de l'invention.

Par ailleurs, chaque moyen de propulsion (3) consiste en un moteur, non représenté sur les figures, entrainant une hélice (6) positionné à l'avant de chaque fuselage latéral (2). L'axe de chaque hélice (6) forme un angle, dans le plan vertical, avec le plan des ailes et/ou lesdites ailes comportent des volets à simple ou double ou triple fente afin de procurer une aile dite soufflée. Ainsi, les hélices (6) soufflent directement la quasi-totalité des ailes et augmente fortement la portance dans cette zone. De cette manière, le véhicule aérien suivant l'invention présente un coefficient de portance très élevé permettant un décollage sur une courte distance, de l'ordre de 90 mètres.

De plus, chaque aile latérale (5) est constituée d'une première partie d'aile (5a) s'étendant sensiblement dans le même plan que l'aile (4) reliant les fuselages latéraux (2) au fuselage central (1), une seconde partie d'aile (5b) s'étendant sensiblement verticalement au-dessus de la première partie d'aile (5a) et étant inclinée d'avant en arrière et de bas en haut, une troisième partie d'aile (5c) s'étendant sensiblement parallèlement à la première partie d'aile (5a) et s'étendant d'avant en arrière en formant un angle avec le plan frontal du véhicule aérien et une quatrième partie d'aile (5d) s'étendant sensiblement verticalement jusqu'à l'extrémité arrière du fuselage latéral (2). Dans cet exemple particulier de réalisation, la première partie d'aile (5a) de l'aile latérale (5) forme un angle α compris entre 1 et 10° avec l'aile (4) reliant les fuselages latéraux (2) au fuselage central (1). La seconde partie d'aile (5b) forme un angle P compris entre 1 et 15° avec le plan sagittal vertical du véhicule aérien. La troisième partie d'aile (5c) forme un angle γ compris entre 1 et 10° avec l'aile (4) reliant les fuselages latéraux au fuselage central et un angle ω compris entre 1 et 10° avec la première partie d'aile (5a). La quatrième partie d'aile (5d) forme un angle ϕ compris entre -1 et -10° avec le plan sagittal vertical du véhicule aérien. De plus, le rapport entre la hauteur des ailes latérales (5) et l'envergure du véhicule aérien est compris entre 0,15 et 0,25, et de préférence égal à 0,2. On entend par envergure la distance séparant les extrémités des deux ailes latérales (5).

On observera que, dans cet exemple particulier de réalisation, chaque aile latérale (5) présente une forme de quadrilatère ; toutefois, il est bien évident que chaque aile latérale (5) pourra présenter une forme que polygone quelconque à au moins quatre côtés. Accessoirement, au moins un des côtés desdites ailes latérales peut est incurvé.

Par ailleurs, afin d'obtenir une bonne stabilité longitudinale du véhicule aérien suivant l'invention, l'angle de flèche F₁ de l'aile (4) est compris entre 5 et 15°, et de préférence égal à 10°, et l'angle de flèche F₂ de la troisième partie d'aile (5c) de chaque aile latérale (5) est compris entre -10° et -30°, et de préférence égal à -20°.

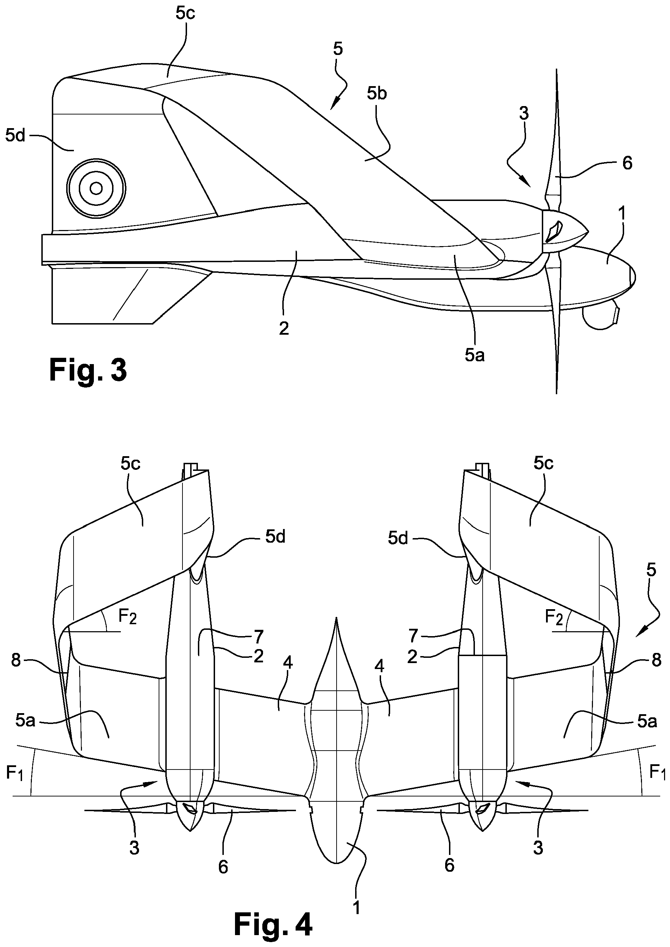

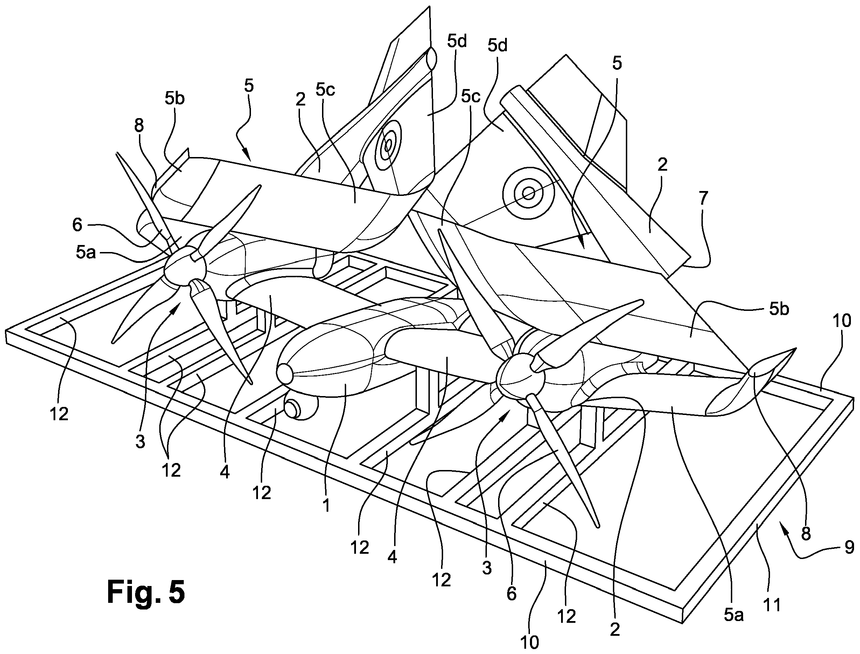

De manière avantageuse, en référence aux figures 4 et 5, les fuselages latéraux (2) sont constitués de deux parties articulées par tous moyens d'articulation (7) bien connus de l'homme du métier et les secondes parties d'aile (5b) des ailes latérales (5) comprennent des moyens d'articulation (8) de manière à replier la partie arrière des fuselages latéraux (2) au-dessus de la partie avant des fuselages latéraux (2) et les ailes latérales (5) au-dessus de l'aile (4) (figure 5). Ainsi, il est possible de réduire l'encombrement du véhicule aérien lors de son transport sur son site opérationnel par exemple. A cet égard, le véhicule aérien pourra être positionné sur un support de transport constitué d'un châssis (9) comprenant des longerons (10), des traverses (11) et des entretoises (12).

Selon une variante d'exécution, non représentée sur les figures, l'aile (4) reliant les fuselages latéraux (2) au fuselage central (1) comporte des moyens d'articulation permettant de replier les ailes latérales (5) au-dessus du fuselage central (1) afin de réduire l'encombrement du véhicule aérien lors de son transport sur son site opérationnel.

Il va de soi que lesdits moyens d'articulation pourront consister dans tous moyens d'articulation bien connus de l'homme du métier.

De plus, il est bien évident que les moteurs entrainant les hélices (6) consisteront de préférence dans des moteurs thermiques alimentés en carburant stocké dans des réservoirs positionnés dans les fuselages latéraux (2) et les ailes (4,5) ; toutefois, lesdits moteurs pourront également consister dans des moteurs électriques sans pour autant sortir du cadre de l'invention.

Enfin, il est bien évident que les exemples que l'on vient de donner ne sont que des illustrations particulières et en aucun cas limitatifs quant au domaine d'application de l'invention.

## Revendications

1. Véhicule aérien comprenant au moins deux fuselages latéraux (2) connectés par une aile (4), au moins un moyen de propulsion, et deux ailes latérales (5) s'étendant respectivement depuis les fuselages latéraux (2) et présentant respectivement une section frontale en forme de polygone à au moins quatre côtés, le moyen de propulsion (3) consistant en un moteur porté par chaque fuselage latéral (2) et entrainant respectivement une hélice (6), chaque aile latérale (5) étant constituée d'une première partie d'aile (5a) s'étendant sensiblement dans le même plan que l'aile (4) reliant les fuselages latéraux (2), une seconde partie d'aile (5b) s'étendant sensiblement verticalement au-dessus de la première partie d'aile (5a) et étant inclinée d'avant en arrière et de bas en haut, une troisième partie d'aile (5c) s'étendant sensiblement parallèlement à la première partie d'aile (5a) et s'étendant d'avant en arrière en formant un angle avec le plan frontal du véhicule aérien et une quatrième partie d'aile (5d) s'étendant sensiblement verticalement jusqu'à l'extrémité arrière du fuselage latéral (2),
**caractérisé en ce que**:
le rapport entre la hauteur des ailes latérales (5) et l'envergure du véhicule aérien est compris entre 0,15 et 0,25.

2. Véhicule aérien suivant la revendication 1 ***caractérisé* en ce que** l'axe de chaque hélice (6) forme un angle, dans le plan vertical sagittal, avec le plan des ailes.

3. Véhicule aérien suivant l'une quelconque des revendications 1 à 2 ***caractérisé* en ce que** lesdites ailes (4,5) comportent des volets à simple ou double ou triple fente.

4. Véhicule aérien suivant l'une quelconque des revendications 1 à 3 ***caractérisé* en ce que** le rapport entre la hauteur des ailes latérales (5) et l'envergure du véhicule aérien est égal à 0,2.

5. Véhicule aérien suivant l'une quelconque des revendications 1 à 4 ***caractérisé* en ce que** au moins un des côtés desdites ailes latérales (5) est incurvé.

6. Véhicule aérien suivant l'une quelconque des revendications 1 à 5 ***caractérisé***
**en ce que** les fuselages latéraux (5) et les secondes parties d'aile (5b) des ailes latérales (5) comprennent des moyens d'articulation (8) de manière à replier la partie arrière des fuselages latéraux (2) au-dessus de la partie avant des fuselages latéraux (2) et les ailes latérales (5) au-dessus de l'aile (4).

7. Véhicule aérien suivant l'une quelconque des revendications 1 à 6 ***caractérisé* en ce que** la première partie d'aile (5a) de l'aile latérale (5) forme un angle α compris entre 1 et 10° avec l'aile (4) reliant les fuselages latéraux (2).

8. Véhicule aérien suivant l'une quelconque des revendications 1 à 7 ***caractérisé* en ce que** la seconde partie d'aile (5b) forme un angle P compris entre 1 et 15° avec le plan sagittal vertical du véhicule aérien.

9. Véhicule aérien suivant l'une quelconque des revendications 6 à 8 ***caractérisé* en ce que** la troisième partie d'aile (5 c) forme un angle γ compris entre 1 et 10° avec l'aile (4) reliant les fuselages latéraux (2) au fuselage central (1) et un angle ω compris entre 1 et 10° avec la première partie d'aile (5a).

10. Véhicule aérien suivant l'une quelconque des revendications 1 à 9 ***caractérisé* en ce que** la quatrième partie d'aile (5d) forme un angle ϕ compris entre -1 et -10° avec le plan sagittal vertical du véhicule aérien.

11. Véhicule aérien suivant l'une quelconque des revendications 1 à 10 ***caractérisé* en ce que** l'aile (4) reliant les fuselages latéraux (2) comporte des moyens d'articulation permettant de replier les ailes latérales (5) au-dessus de l'aile (4).

12. Véhicule aérien suivant l'une quelconque des revendications 1 à 11 ***caractérisé* en ce qu'**il comporte un fuselage central (1) s'étendant entre les fuselages latéraux (2).

13. Véhicule aérien suivant la revendication 12 ***caractérisé***
**en ce que** l'axe longitudinal du fuselage central (1) s'étend en dessous de l'aile (4) reliant les fuselages latéraux (2).

14. Véhicule aérien suivant l'une quelconque des revendications 1 à 13 ***caractérisé* en ce que** l'axe de traction moteur s'étend au-dessus de l'aile (4) reliant les fuselages latéraux (2).

15. Véhicule aérien suivant l'une quelconque des revendications 1 à 14 ***caractérisé* en ce que** l'angle de flèche de l'aile (4) est compris entre 5 et 15°, et de préférence égal à 10°.

16. Véhicule aérien suivant l'une quelconque des revendications 1 à 15 ***caractérisé* en ce que** l'angle de flèche de la troisième partie d'aile (5c) de chaque aile latérale (5) est compris entre -10° et -30°, et de préférence égal à -20°.

## Patentansprüche

1. - Luftfahrzeug, das mindestens zwei seitliche Rümpfe (2), welche durch einen Flügel (4) verbunden sind, mindestens ein Antriebsmittel und zwei seitliche Flügel (5) umfasst, welche sich jeweils von den seitlichen Rümpfen (2) erstrecken und welche jeweils einen stirnseitigen Querschnitt in Form eines Vielecks mit mindestens vier Seiten haben, wobei das Antriebsmittel (3) aus einem Motor besteht, der in jedem der seitlichen Rümpfe (2) gelagert ist und jeweils einen Propeller (6) antreibt, wobei jeder der seitlichen Flügel (5) aus einem ersten Flügelabschnitt (5a) besteht, der sich im Wesentlichen in derselben Ebene wie der Flügel (4) erstreckt, welcher die beiden seitlichen Rümpfe (2) verbindet, wobei ein zweiter Flügelabschnitt (5b) sich im Wesentlichen vertikal über dem ersten Flügelabschnitt (5a) erstreckt und von vorn nach hinten sowie von unten nach oben geneigt ist, wobei ein dritter Flügelabschnitt (5c) sich im Wesentlichen parallel zum ersten Flügelabschnitt (5a) erstreckt und sich derart von vorn nach hinten erstreckt, dass er einen Winkel mit der stirnseitigen Ebene des Luftfahrzeugs einschließt, und wobei ein vierter Flügelabschnitt (5d) sich im Wesentlichen vertikal bis zum hinteren Ende des seitlichen Rumpfs (2) erstreckt,
**dadurch gekennzeichnet, dass**
das Verhältnis zwischen der Höhe der seitlichen Flügel (5) und der Spannweite des Luftfahrzeugs im Bereich von 0,15 bis 0,25 liegt.

2. - Luftfahrzeug nach Anspruch 1, **dadurch *gekennzeichnet*, dass** die Achse jedes der Propeller (6), in der sagittalen Vertikalebene, einen Winkel mit der Ebene der Flügel einschließt.

3. - Luftfahrzeug nach einem beliebigen der Ansprüche 1 bis 2, **dadurch *gekennzeichnet*, dass** die Flügel (4, 5) Klappen mit einfachem oder doppeltem oder dreifachem Schlitz aufweisen.

4. - Luftfahrzeug nach einem beliebigen der Ansprüche 1 bis 3, **dadurch *gekennzeichnet*, dass** das Verhältnis zwischen der Höhe der seitlichen Flügel (5) und der Spannweite des Luftfahrzeugs gleich 0,2 ist.

5. - Luftfahrzeug nach einem beliebigen der Ansprüche 1 bis 4, **dadurch *gekennzeichnet*, dass** mindestens eine der Seiten der seitlichen Flügel (5) gekrümmt ist.

6. - Luftfahrzeug nach einem beliebigen der Ansprüche 1 bis 5, **dadurch *gekennzeichnet*, dass** die seitlichen Rümpfe (5) und die zweiten Flügelabschnitte (5b) der seitlichen Flügel (5) Gelenkmittel (8) umfassen, um den hinteren Abschnitt der seitlichen Rümpfe (2) über den vorderen Abschnitt der seitlichen Rümpfe (2) sowie die seitlichen Flügel (5) über den Flügel (4) zu klappen.

7. - Luftfahrzeug nach einem beliebigen der Ansprüche 1 bis 6, **dadurch *gekennzeichnet*, dass** der erste Flügelabschnitt (5a) des seitlichen Flügels (5) einen Winkel α, der im Bereich von 1 bis 10° liegt, mit dem Flügel (4) einschließt, welcher die seitlichen Rümpfe (2) verbindet.

8. - Luftfahrzeug nach einem beliebigen der Ansprüche 1 bis 7, **dadurch *gekennzeichnet*, dass** der zweite Flügelabschnitt (5b) einen Winkel β, der im Bereich von 1 bis 15° liegt, mit der vertikalen Sagittalebene des Luftfahrzeugs einschließt.

9. - Luftfahrzeug nach einem beliebigen der Ansprüche 6 bis 8, **dadurch *gekennzeichnet*, dass** der dritte Flügelabschnitt (5c) einen Winkel γ, der im Bereich von 1 bis 10° liegt, mit dem Flügel (4), welcher die seitlichen Rümpfe (2) mit dem mittigen Rumpf (1) verbindet, und einen Winkel ω, der im Bereich von 1 bis 10° liegt, mit dem ersten Flügelabschnitt (5a) einschließt.

10. - Luftfahrzeug nach einem beliebigen der Ansprüche 1 bis 9, **dadurch *gekennzeichnet*, dass** der vierte Flügelabschnitt (5d) einen Winkel ϕ, der im Bereich von -1 bis -10° liegt, mit der vertikalen Sagittalebene des Luftfahrzeugs einschließt.

11. - Luftfahrzeug nach einem beliebigen der Ansprüche 1 bis 10, **dadurch *gekennzeichnet*, dass** der Flügel (4), welcher die seitlichen Rümpfe (2) verbindet, Gelenkmittel aufweist, die es ermöglichen, die seitlichen Flügel (5) über den Flügel (4) zu klappen.

12. - Luftfahrzeug nach einem beliebigen der Ansprüche 1 bis 11, **dadurch *gekennzeichnet,* dass** es einen mittigen Rumpf (1) umfasst, der sich zwischen den seitlichen Rümpfen (2) erstreckt.

13. - Luftfahrzeug nach Anspruch 12, **dadurch *gekennzeichnet*, dass** die Längsachse des mittigen Rumpfs (1) sich unterhalb des Flügels (4) erstreckt, der die seitlichen Rümpfe (2) verbindet.

14. - Luftfahrzeug nach einem beliebigen der Ansprüche 1 bis 13, **dadurch *gekennzeichnet*, dass** sich die Achse des Motorantriebs oberhalb des Flügel (4) erstreckt, der die seitlichen Rümpfe (2) verbindet.

15. . Luftfahrzeug nach einem beliebigen der Ansprüche 1 bis 14, **dadurch *gekennzeichnet*, dass** die Pfeilung des Flügels (4) im Bereich von 5 bis 15° liegt, wobei sie vorzugsweise gleich 10° ist.

16. . Luftfahrzeug nach einem beliebigen der Ansprüche 1 bis 15, **dadurch *gekennzeichnet*, dass** die Pfeilung des dritten Flügelabschnitts (5c) jedes der seitlichen Flügel (5) im Bereich von -10° bis -30° liegt, wobei sie vorzugsweise gleich -20° ist.

## Claims

1. An aerial vehicle comprising at least two side fuselages (2) interconnected via a wing (4), at least one propulsion means, and two side wings (5) extending from respective ones of the side fuselages (2), each side wing having a section as seen from the front that is in the shape of a polygon having at least four sides, the propulsion means (3) consisting of an engine carried by a respective side fuselage (2) and driving a respective propeller (6), each side wing (5) being constituted by a first wing portion (5a) extending substantially in the same plane as the wing (4) interconnecting the side fuselages (2), a second wing portion (5b) extending substantially vertically above the first wing portion (5a) and being inclined rearwards and upwards, a third wing portion (5c) extending substantially parallel to the first wing portion (5a) and extending rearwards while forming an angle with the front plane of the aerial vehicle, and a fourth wing portion (5d) extending substantially vertically down to the rear end of the side fuselage (2), **characterized in that**:
the ratio between the height of the side wings (5) and the wingspan of the aerial vehicle lies in the range 0.15 to 0.25.

2. Aerial vehicle according to claim 1, **characterized in that** the axis of each propeller (6) forms an angle, in a vertical fore-and-aft plane, with the plane of the wings.

3. Aerial vehicle according to any one of claims 1 to 2, **characterized in that** said wings (4, 5) have flaps having single, double, or triple slots.

4. Aerial vehicle according to any one of claims 1 to 3, **characterized in that** the ratio between the height of the side wings (5) and the wingspan of the aerial vehicle is equal to 0.2.

5. Aerial vehicle according to any one of claims 1 to 4, **characterized in that** at least one of the sides of each of said side wings (5) is curved.

6. Aerial vehicle according to any one of claims 1 to 5, **characterized in that** the side fuselages (5) and the second wing portions (5b) of the side wings (5) are provided with hinge means (8) so that the rear portions of the side fuselages (2) can be folded over above the front portion of the side fuselages (2) and so that the side wings (5) can be folded over above the wing (4).

7. Aerial vehicle according to any one of claims 1 to 6, **characterized in that** the first wing portion (5a) of the side wing (5) forms an angle α lying in the range 1° to 10° with the wing (4) interconnecting the side fuselages (2).

8. Aerial vehicle according to any one of claims 1 to 7, **characterized in that** the second wing portion (5b) forms an angle β lying in the range 1° to 15° with a vertical fore-and-aft plane of the aerial vehicle.

9. Aerial vehicle according to any one of claims 6 to 8, **characterized in that** the third wing portion (5c) forms an angle γ lying in the range 1° to 10° with the wing (4) connecting the side fuselages (2) to the central fuselage (1), and an angle ω lying in the range 1° to 10° with the first wing portion (5a).

10. Aerial vehicle according to any one of claims 1 to 9, **characterized in that** the fourth wing portion (5d) forms an angle ϕ lying in the range -1° to -10° with a vertical fore-and-aft plane of the aerial vehicle.

11. Aerial vehicle according to any one of claims 1 to 10, **characterized in that** the wing (4) interconnecting the side fuselages (2) is provided with hinge means making it possible to fold the side wings (5) over above the wing (4).

12. Aerial vehicle according to any one of claims 1 to 11, **characterized in that** it further comprises a central fuselage (1) extending between the side fuselages (2).

13. Aerial vehicle according to claim 12, **characterized in that** the longitudinal axis of the central fuselage (1) extends below the wing (4) interconnecting the side fuselages (2).

14. Aerial vehicle according to any one of claims 1 to 13, **characterized in that** the engine traction axis extends above the wing (4) interconnecting the side fuselages (2).

15. Aerial vehicle according to any one of claims 1 to 14, **characterized in that** the sweepback angle of the wing (4) lies in the range 5° to 15°, and is preferably equal to 10°.

16. Aerial vehicle according to any one of claims 1 to 15, **characterized in that** the sweepback angle of the third wing portion (5c) of each side wing (5) lies in the range -10° to - 30°, and is preferably equal to -20°.
